# EUROPEAN PATENT APPLICATION

(11) **EP 1 793 311 A2**
(43) Date of publication of application: **06.06.2007**
(21) Application number: 06125264.9
(22) Date of filing: 01.12.2006
(51) Int. Cl.: G06F 9/445

(54) **System and method for a patch minimization tool**

(30) Priority: 01.12.2005 US 741322 P; 18.01.2006 US 333847; 28.11.2006 KR 20060118497
(71) Applicant: Samsung Electronics Co., Ltd., Suwon-si, Gyeonggi-Do (KR)
(72) Inventor: Fan, Guoxin, Plano, TX Texas 75023 (US); Budhati, Vani, Garland, TX Texas 75044 (US); Ingles, Roger, Richland Hills, TX Texas 76180 (US)
(74) Representative: Grünecker, Kinkeldey, Stockmair & Schwanhäusser Anwaltssozietät

(57) **Abstract**

The present disclosure relates to a method for providing an image for use in a mobile device, the method including receiving at least one of a plurality of object files required for forming the image from an assembler in machine language and identifying the plurality of received object files; forming a plurality of components from the object files; determining a base address for each component; generating a memory layout to define a location of each of the identified components at the corresponding base address; and calling a linker to link the components as defined by the memory layout to create the image.

## Description

The present invention relates generally to a system and a method for updating software for a wireless device, and more particularly to a system and a method for a patch minimization tool, wherein the size of a patch can be minimized so as to update a wireless device. The present invention further relates to a corresponding wireless device that is adapted to perform according to the above methods.

In general, handsets and other wireless devices contain software in the form of executable instructions and non-executable data stored in a memory. The software provides such devices with the ability to perform various functions, such as communicate via a wireless network, handle call features such as call waiting and call forwarding, and maintain a calendar and address book.

However, once a wireless device is provided to an end user, it becomes difficult to provide additional software or to make corrections to the software already installed on the device. To address this problem, firmware over the air (FOTA) was developed to enable a service provider to send software updates over a wireless network to a wireless device. Such updates may provide additional functionality to software already existing on the wireless device or may provide bug fixes to address problems with the existing software. However, while an update process such as the FOTA presents a way to send software to a wireless device, using such an update process is not without problems. Accordingly, the efficient provision of software over an air interface to a wireless device is challenging.

It is the object of the present invention to provide a system, a mobile device and a method for a patch minimization tool, wherein, when an image for use in the mobile device is provided, the final image is created in such a manner that the influence of future updates is minimized.

This object is solved by the subject matter of the independent claims.

Preferred embodiments are defined by the subject matter of the dependent claims.

It is an aspect of the present invention to provide a system and a method for a patch minimization tool, wherein, when an image for use in a mobile device is provided, a redirection mechanism based on an image delta between an original image and an updated image is used so as to update the image for the mobile device.

In order to accomplish the above, according to an aspect of the present invention, there is provided a method for providing an image. The method includes identifying a plurality of object files required for forming an image for a wireless device, where at least one of the object files is received from an assembler in machine language. A plurality of components are formed from the object files and a base address is determined for each component. A memory layout is generated to defme a location of each of the identified components at the corresponding base address, and a linker is called to link the components as defined by the memory layout to create the image.

In accordance with another aspect of the present invention, there is provided a method for updating a mobile device. The method includes determining an image delta between an original image stored on the mobile device and an updated image and identifying any changed addresses in a redirection mechanism based on the image delta, where the redirection mechanism identifies locations within the original image. The redirection mechanism is updated to reflect any changed locations and changes identified by the image delta and the updated redirection mechanism are transferred to the mobile device.

In accordance with another aspect of the present invention, there is provided a method for minimizing a patch size. The method includes forming components from a plurality of files required for creating the patch, where at least one file is received in machine language code. A base address is determined for each component and a memory layout is generated to define a location of each component at the corresponding base address. A linker is called to link the components as defined by the memory layout to create the patch.

In accordance with another aspect of the present invention, there is provided a system for minimizing a patch size. The system includes an assembler, a linker, and a patch minimization module. The patch minimization module is configured to receive a plurality of files in machine language code after at least one of the files is processed by the assembler and form components from the plurality of files. The patch minimization module is also configured to determine a base address for each component, generate a memory layout to defme a location of each component at the corresponding base address, and call the linker to generate the patch as defined by the memory layout.

Aspects of the present invention are best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
Fig. 1 illustrates a system according to an embodiment of the present invention;
Fig. 2 is a block diagram of an image creation system according to the embodiment of Fig. 1;
Fig. 3 is a block diagram of a wireless device according to the embodiment of Fig. 1;
Figs. 4a-4c illustrate various embodiments of a memory containing a monolithic image;
Fig. 5 is a flowchart of a method for generating an image having a layout that minimizes changes in future updates according to an embodiment of the present invention;
Fig. 6 illustrates a compilation system for producing an executable file according to an embodiment of the present invention;
Fig. 7 is a flowchart of a procedure for generating an image having a layout that minimizes changes in future updates according to an embodiment of the present invention;
Fig. 8 is a flowchart of a procedure for generating an image having a layout that minimizes changes in future updates according to another embodiment of the present invention;
Figs. 9a and 9b illustrate a memory containing an monolithic image and a redirection mechanism according to embodiments of the present invention; and
Fig. 10 is a flowchart of a procedure for updating an existing monolithic image having a patch minimization layout according to an embodiment of the present invention.

It is to be understood that the following disclosure provides many different embodiments, or examples, for implementing different features of the invention. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

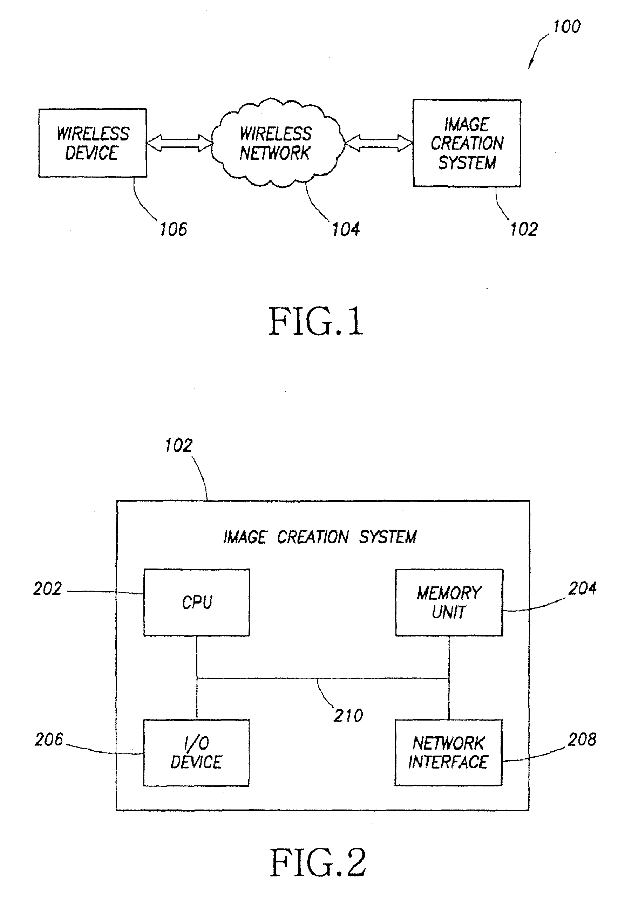

Referring to Fig. 1, a system 100 according to an embodiment of the present invention is illustrated. The system 100 includes an image creation system 102, a wireless network 104, and a wireless device 106. As will be described below in greater detail, the image creation system 102 provides functionality to create an image containing executable instructions and/or data. The image is transferred via the wireless network 104 to the wireless device 106. The wireless device 106 then uses the transferred image to provide various functionalities to a user and communicate with other devices via the wireless network 104. The image may contain various combinations of functionality and data, and additional features and bug fixes may be used to update the image by the image creation system 102. The wireless network 104 may be any type of network, including centralized and ad hoc networks, and may use any type of network technology, including Code Division Multiple Access (CDMA), Global System for Mobile communication (GSM), Orthogonal Frequency Division Multiplexing (OFDM), or similar communications technologies. In the present embodiment, the network is described as a packet-based network, but it is understood that the present disclosure applies to any type of transmission in the same manner.

Referring to Fig. 2, a computer is illustrated as an embodiment of the above-mentioned image creation system 102 of Fig. 1. Particularly, the image creation system 102 may include a central processing unit ("CPU") 202, a memory unit 204, an input/output ("I/O") device 206, and a network interface 208.

The network interface 208 may be, for example, one or more wireless and/or wireline network interface cards (NICs) that are each associated with a media access control (MAC) address. In addition, the network interface 208 may be coupled directly to the wireless network 104 or may be coupled via one or more other networks (not shown). Meanwhile, respective components 202, 204, 206, and 208 of the image creation system 102 may be interconnected by a bus system 210.

The image creation system (i.e. computer) 102 may be differently configured, and each of the listed components may actually represent several different components. For example, the CPU 202 may represent a multi-processor or a distributed processing system; the memory unit 204 may include different levels of cache memory, main memory, hard disks, and remote storage locations; and the I/O device 206 may include monitors, keyboards, and the like.

Furthermore, although shown within the image creation system 102, some components (e.g., a keyboard) may be physically located outside of the image creation system 102. In addition, some or all of the components 202, 204, 206, and 208 may be distributed. Therefore, a wide range of flexibility is anticipated in the configuration of the image creation system 102.

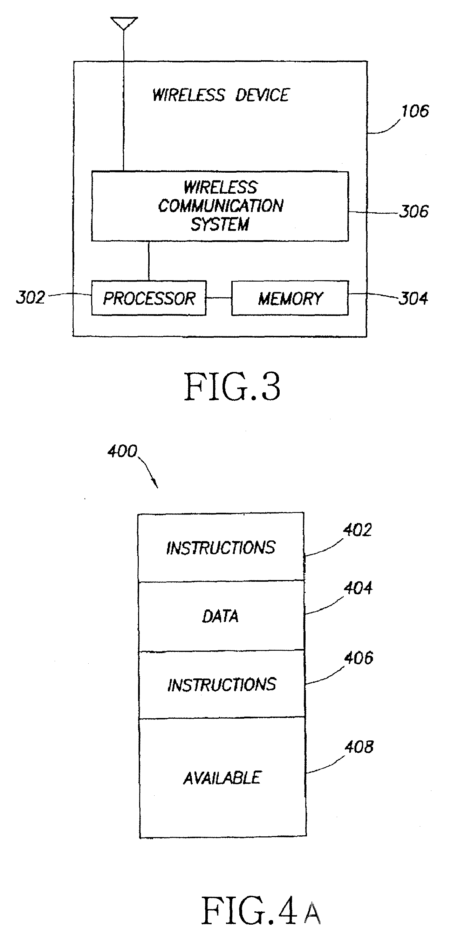

Referring to Fig. 3, an embodiment of the wireless device 106 of Fig. 1 is illustrated. The wireless device 106 includes a processor 302, a memory 304, and a wireless communication system 306. The wireless device 106 can be any mobile device, including cellular phones, personal digital assistants, and laptop computers. An operating system may be used to control the wireless device 106 and provide a user interface by which a user of the device can access and utilize various functions.

The memory 304 of the wireless device 106 includes a binary image of the executable instructions and data contained within the wireless device, although it is noted that not all instructions and data may be included in the image. In the present embodiment, the image may be any type of image, including a static monolithic image that may or may not have dynamic linking properties. More specifically, the type of image contained in the memory 304 generally depends on the operating system used to control the wireless device 106. The operating system may or may not support dynamic linking (e.g., through the use of dynamic link libraries (DLLs) or dynamic shared objects (DSOs)).

As is known, a DLL may generally be defined as a file containing executable code and/or data that is bound to a program at load time or run time, rather than during linking. Therefore, multiple applications may share the code and data in a DLL simultaneously. DLLs are associated with the WINDOWS operating system (WINDOWS is a registered trademark of Microsoft Corp. of Redmond, WA). A DSO may be generally defined as a mechanism that provides a way to build a piece of program code in a special format for loading at run time into the address space of an executable program. The DSO gets knowledge of the executable program symbol set as if it had been statically linked with it. DSOs are associated with the UNIX/LINUX operating systems.

Problems related to the use of an image often stem from image updates that occur when the image present on the wireless device 106 is updated with a new image. When an image update occurs, the differences between the image on the device and the new image that is to be transferred to the device are referred to as the image delta (e.g., the amount of change) between the two images. One such problem is "code slide" that occurs when the image delta is large and an update of the image causes a portion of the code forming the image to slide into the memory space occupied by another portion of the code. This problem is illustrated in greater detail in Figs. 4a-4c.

Firstly, referring to Fig. 4a, an embodiment of a monolithic image 400 is illustrated. The monolithic image 400 may include first and second instruction regions 402 and 406 and a data region 404. These regions 402, 404, and 406 are for purposes of illustration only, and any combination or organization of instructions and data may be provided. As illustrated, each region 402, 404, and 406 of the monolithic image abuts the next region, and there is an available region 408 of memory following and contiguous with the second instruction region 406. However, if any region other than the second region 406 is updated, there is no available memory in which the update can be stored contiguously with the region being updated.

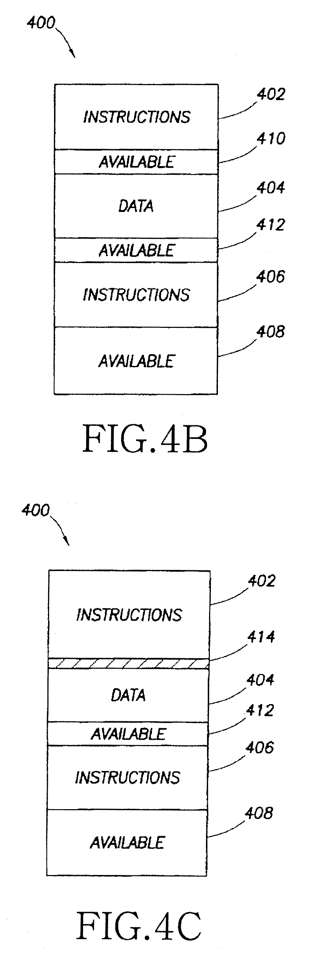

With additional reference to Fig. 4b, the image of Fig. 4a is illustrated with a segmented linking structure. The segmented linking structure breaks the image 400 into various regions (e.g., first, second, and third regions 402, 404, and 406) and separates each region with a block of available memory. For example, there is an available region 410 contiguous to the first instruction region 402, an available region 412 contiguous to the second instruction region 404, and a separate available region 408 described with reference to FIG. 4a. It is noted that the separate available region 408 is now smaller due to the existence of the available regions 410 and 412. The available regions allow for some expansion of the regions 402 and 404 without the need to recreate the entire monolithic image. This solution may be feasible in some situations, but generally fails to solve the code slide problem because updates are frequently larger than the allocated contiguous memory, as is illustrated in Fig. 4c.

With additional reference to Fig. 4c, the instruction region 402 requires more space than originally allotted in the available region 412. Accordingly, if the instruction region 402 is to remain as a contiguous block, it will overlap with the data region 404 as indicated by the overlap region 414. In the present embodiment, the overlap region 414 may overwrite the data region 404, the overlap region 414 may be broken into a non-contiguous region and stored partly in non-contiguous available memory, or the data region 404 will have to be moved. Obviously, overwriting the beginning of the data region 404 may destroy the functionality. Breaking the overlap region 414 into a non-contiguous region is often undesirable and moving the data region 404 may result in a larger update.

Meanwhile, although the segmented linking structure is generally a better solution than using an image file without the available contiguous memory spaces provided by segmented linking, the structure does not satisfactorily solve the problems presented by the monolithic image. For example, to generate the segmented linking structure, a file such as a scatter file may be used. As is known, a scatter file is used to tell a linker where to load files or objects in memory. It is generally time consuming to generate the scatter file. Furthermore, the segmented linking structure tends to consume relatively large amounts of memory, as the available spaces left between segments should be large enough to accept an expected size increase in the corresponding segment. Even then, the available spaces may overflow relatively quickly due to updates and bug fixes, which means that a new scatter file has to be generated. Moving a function between segments may also require that a new scatter file be generated. The complexity and free memory required for the segmented linking structure are generally proportional to the code size.

It is generally not possible to perform segmented linking with respect to third party libraries. In addition, the segmented linking structure maintains references between segments, so modifying a segment may result in needing to update all references in the image. For these and other reasons, changes to read-write data, read only data, and uninitialized data may result in large changes to the image.

Generally, there is little flexibility available for the organization of the software represented by the image. The image is created using tools outside of the wireless device and then transferred to the wireless device when complete. Updates such as additional features and bug fixes may require that the entire image be modified and transferred to the wireless device. This is often impractical for a number of reasons. Not only is it impractical to utilize a customer's bandwidth for a lengthy period of time, but governmental regulations may limit the amount of time that an update may take. For example, governmentally mandated 911 restrictions may require that an update take no more than five minutes. As such, updating large portions of an existing image on a mobile device is often unfeasible.

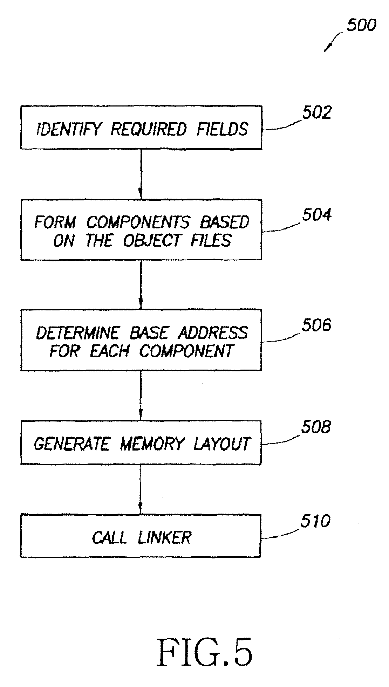

Referring to Fig. 5, an embodiment of a method 500 for handling the code slide problem when creating an image is illustrated. In step 502, the method 500 identifies required files for the image. One or more of the required files may be received in machine language code from an assembler. In step 504, multiple components that make up the image are formed from the required files. As will be described later in greater detail, the components contain modules that form the image and may have little or no correspondence to the segments of a segmented linking structure that would be formed from the same image. A component or module may be a default type or may be user defined.

In step 506, a base address is determined for each component. The base addresses are selected to minimize the impact of later updates to the image. For example, if the memory for which the image is being created is flash memory, the base addresses may be selected to minimize the number of flash sectors that will need to be modified in later updates. In step 508, a memory layout is generated using the components and the base addresses. Finally, in step 510, a linker is called to link the components based on the memory layout. Accordingly, the final image can be constructed in such a way as to minimize the impact of future updates.

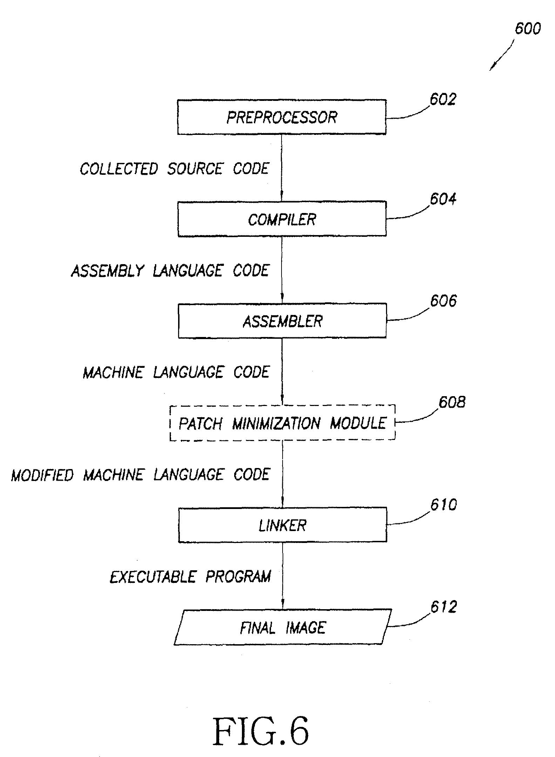

Referring to Fig. 6, an embodiment of a compiling system 600 uses various modules for compiling an executable program 612 in the image creation system 102 of Fig. 1. A software program is generally written using a high level language (i.e., source code) and converted into machine readable language (i.e., object code). Although some variations in terminology and actual processing may occur, the compiling system 600 provides modules used in a common conversion process including a preprocessor 602, a compiler 604, an assembler 606, and a linker 610. The preprocessor 602, compiler 604, assembler 606, and linker 610 are commonly used modules that are generally associated with a specific programming language and/or platform.

Meanwhile, a patch minimization module 608 is inserted into the process between the assembler 606 and linker 610 to modify the output of the assembler before linking, as is discussed below in greater detail. This placement enables the patch minimization module 608, for example, to manipulate the various files before they become too large to easily manipulate.

The preprocessor 602 is responsible for collecting different parts of a source program that is to be compiled. The compiler 604 takes the output of the preprocessor 602 and converts it into assembly language code, and the assembler 606 translates the assembly language code into machine language code. Traditionally, the linker 610 would then take the machine language code, identify any libraries or other external modules referred to by the machine language code, and bind these modules to the machine language code to form the final image 612.

In the present embodiment, the patch minimization module 608 receives the machine language code produced by the assembler 606, modifies the code, and then calls the linker 610 to link the modified code. It is noted that the assembler 606 and linker 610 may be basically unchanged from a system that does not include the patch minimization module 608. For example, the assembler 606 may be modified to call the patch minimization module 608 rather than the linker 610, or the call from the assembler may be intercepted by the patch minimization module. In other embodiments, the assembler output may be written to a file and the patch minimization module 608 may operate on the file prior to calling the linker 610. The linker 610 may be unchanged.

Because of the need to identify and manipulate code at the machine code level and because machine code is generally created for a specific platform/architecture, it is understood that a different patch minimization module 608 may need to be written for each platform for which the patch minimization functionality is provided. For example, different patch minimization modules may be provided as plug-ins or modules to a programming tool used to manipulate object code, such as BFD (Binary File Descriptor).

As is known, BFD is a software tool that uses a library to allow an application to use a set of routines to operate on object files despite the format of the object files. A new object file format can be supported by creating a new BFD back end and adding it to the BFD library. The BFD is split into a front end and one or more back ends, with one back end for each object file format. The front end provides a user interface and manages memory and various canonical data structures, as well as deciding which back end to use and when to call back end routines. In addition, each back end provides a set of calls that the front end can use to maintain its canonical form. Accordingly, each patch minimization module for a particular platform/architecture can be provided as a back end to a tool such as BFD.

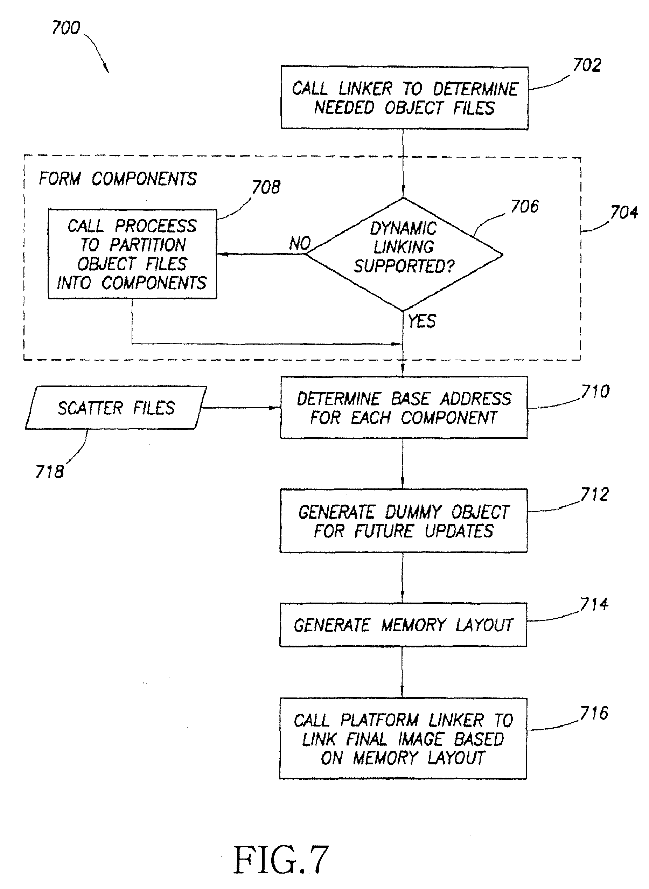

Referring to Fig. 7, in another embodiment, a method 700 provides a more detailed example of a patch minimization process. Firstly, in step 702, the method 700 calls a linker (e.g., the linker 610 of Fig. 6) to identify the object files needed to form an image that is to be transferred to a wireless device. The output of the linker may be written to a file for use by later steps in the method 700.

After identifying the required object files in this manner, multiple components are formed based on the object files in step 704. Each component is formed to minimize the impact that a future update will have on the image. Each component may be a collection of modules, where a module is a relocatable object, and the collection may be predefined (e.g., an archive). For example, an archive (often having a name of *.a or *.lib) may be a library that includes multiple modules, and the library itself may be identified as a component. To identify the components, the method 700 examines the machine language code to identify affinities between various pieces of code and then, unless otherwise directed, builds the components based on those affinities.

The components may be based on user provided definitions, default definitions, or a combination of user provided and default definitions. For example, a default definition may define a component as a collection of related modules (e.g., a single library or other defined collection), with any non-library files combined into a single component. Accordingly, if there are two libraries and multiple non-library files, there would be three components.

In contrast, if a user has provided a component definition, that may override any applicable default definition. For example, the user may combine multiple libraries into a single component, divide a library into multiple components, etc. In addition, user-defined and default definitions may be mixed, with a user defining certain components and allowing other components to be defined according to the default definitions.

As illustrated, within step 704, a determination may be made in step 706 as to whether the platform for which the image is being prepared supports dynamic linking (e.g., DLLs or DSOs). If the platform does support dynamic linking, the method forms the components with each DLL or DSO being a component (unless a user has specified otherwise). In contrast, if the platform does not support dynamic linking, the method continues to step 708, where it may call another process to partition the object files into components.

In step 710, a base address is determined for each of the components. The base address may be determined by examining the existing memory structure and any files, such as scatter files, that direct the linker to load files or objects in a particular memory space. Each base address is selected to minimize the amount of change that a future update may cause. For example, a component that will likely require frequent updates may be given a base address that will allow it to have more room for code slide than a component that is rarely updated.

In step 712, a dummy object is generated to store the components and their base addresses for use in future updates. In step 714, a memory layout for a linker is generated based on the components and their base addresses. Finally, in step 716, a linker is called to link the components based on the memory layout.

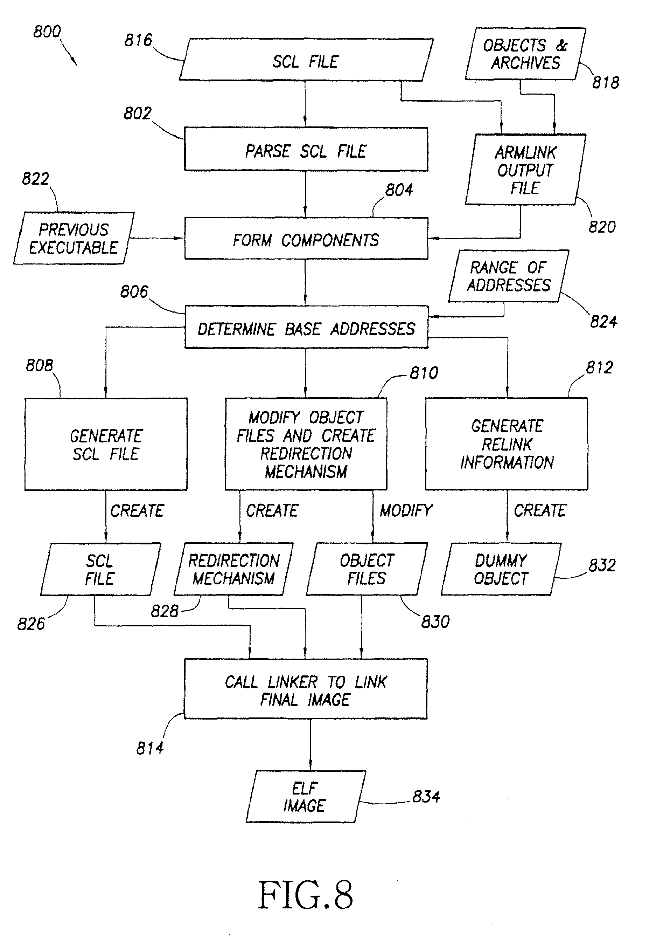

Referring to Fig. 8, in yet another embodiment, a method 800 provides a more detailed example of the method 700 of Fig. 7 as performed by the patch minimization module 608 of Fig. 6. For purposes of illustration, the present embodiment utilizes the ARM linker ("armlink") produced by ARM, Ltd., of the United Kingdom, as the linker 610 (Fig. 6). Accordingly, it is understood that various references to armlink may be substituted with other linkers, depending on the linker used. In addition, the present example refers to files in the executable and linking format (ELF), but other file formats may be used.

The method 800 proceeds through a number of steps 802, 804, 806, 808, 810, 812, and 814, and may use a number of different files as inputs and produce other files as outputs. Input files may include one or more scatter load (SCL) files 816, various objects and archives 818, an armlink output file 820, a previous executable 822, and a range of addresses 824. Output files may include another SCL file 826, a redirection mechanism 828, object files 830, a dummy object 832, and a final ELF image 834. It is noted that the term "file" may represent any type of object, including text files, script files, or code in source, assembly, or machine code language.

The method 800 is supposed to create a final image that is optimized for future updates. If the image is being newly created (e.g., the image is a base build), the method 800 organizes the image in memory to minimize the impact of future updates. If the image is being updated, rather than newly created, the previous executable 822 (e.g., the base build or a previously updated image) may also be used to identify and form the components. If the image is being updated and the original image was not formed using the patch minimization module 608, the method 800 may try to optimize the image as much as possible without requiring an entire image update. The base build enables the method 800 to optimize later image updates.

In step 802, the method 800 parses the SCL file(s) 816. The SCL file 816 is generally created as a hardware specific file that details the hardware layout of a particular architecture. The SCL file enables a user to partition the image into a number of separate code and data regions spread throughout the memory's address map.

The SCL file 816 and the objects and archives 818 (e.g., various object files and libraries) are also used to create an armlink output file 820. For example, the method 800 may create the armlink output file 820 by calling armlink using a parameter such as the "-list" parameter to re-direct armlink's standard output stream to a file. Alternatively, the method 800 may use various armlink lists created prior to the final output and operate using those lists. The armlink output file 820 may be used by the method 800 to identify all the modules that are used to form the image.

In step 804, the method 800 forms components based on the parsed SCL file 816 and armlink output file 820. A component may contain a single module or a collection of modules, where a module may be a relocatable object file. In the present embodiment, modules may be in a format such as ELF. If the image is being updated, rather than newly created, the previous executable 822 may also be used to identify and form the components.

As described previously, different processes may be used depending on whether the intended platforms does or does not support dynamic linking. For example, the method 800 may identify and form components itself for platforms that support dynamic linking, while another process may be used to identify and form components for platforms that do not support dynamic linking.

In step 806, a base address is determined for each component. The determination incorporates a range of addresses 824 that defines the ranges of addresses that are available in the hardware for the components. This enables restrictions to be placed on where components may be placed. For example, if a certain amount of memory is to be reserved for future updates, the range of addresses may be defined so as to make the reserved memory off limits for storing the components.

Although steps 808, 810, and 812 are shown in parallel, it is understood that they may not actually be executed in parallel. In step 808, one or more SCL files 826 are generated. The SCL file 826 is modified from the original SCL file 816 to account for the arrangement of the components using the base addresses determined in step 806.

In step 810, the method 800 creates a redirection mechanism 830 and alters the originally received object files (now contained in components) to create modified object files 828 based on the redirection mechanism. The redirection mechanism 830 enables the method 800 to remove any direct references between components and to replace the direct references with references to the redirection mechanism. References that are internal to a component are not altered.

The redirection mechanism may be, for example, one or more jump tables or veneers. A jump table is an array containing the addresses of subroutines (e.g., provides an indirect reference to each subroutine). Accordingly, if a component references a particular element of the array, the component will be redirected to the corresponding subroutine. A veneer is a short sequence of instructions used to make a subroutine call. The calling component transfers control to the veneer using an instruction such as a limited-range branch instruction. The veneer then transfers control to the destination subroutine by a mechanism that permits a transfer to the appropriate destination. Accordingly, both a jump table and a veneer enable redirection. It is understood that other redirection mechanisms may be substituted, although some modifications may be needed depending on the particular redirection mechanism used.

In step 812, the method generates relink information to create a dummy object 832. The dummy object 832 may be used for future updates. In the present embodiment, the ELF format (or other format) is extended to include space to store the update information, including the components and their base addresses. A linker (e.g., armlink) is then called to create the final image 834 in step 814.

Meanwhile, an image delta may be formed if the image is being updated. In this case, only the changed information (e.g., components) would be uploaded. As the image itself has been optimized and any links between the components changed to references to the redirection mechanism, only the components that are being updated would need to be uploaded, along with any changes to the redirection mechanism.

For purposes of example, the image itself may be approximately twenty-two megabytes (MB), although it is understood that any size of image may be used. Each jump table (assuming a jump table for each component) may be approximately four kilobytes (KB). The size of the available memory spaces 806 and 808 may be approximately four to sixteen KB and may be located after each four MB space containing one or more components. The remaining memory may constitute a contiguous memory space of between approximately two hundred and fifty KB and eight hundred KB. It is understood that these values are for illustration only, and that the size of the image, jump table(s), available memory spaces, and remaining memory may be of any size desired.

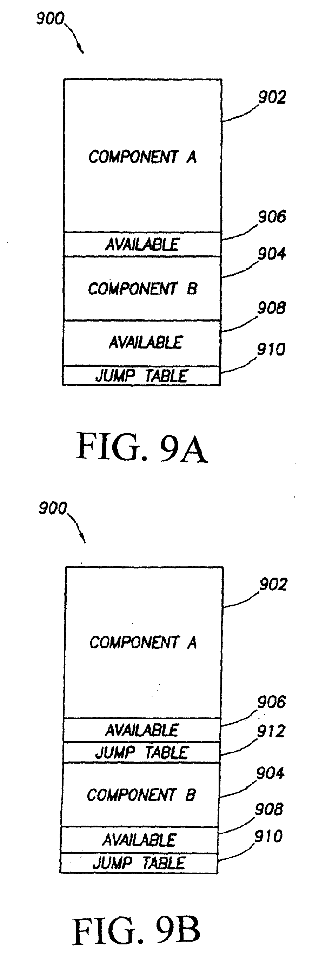

With reference to Fig. 9a, an embodiment of a monolithic image 900 includes a Component A (denoted by reference number 902) and a Component B (denoted by reference number 904). Component A is associated with an available region 906 of a corresponding contiguous memory space, and component B is associated with an available region 908 of a corresponding contiguous memory space. These available regions 906 and 908 provide their corresponding components with some contiguous expansion room. As mentioned above, there may be a single jump table 910 for the monolithic image 900, or multiple jump tables may be used (as illustrated by the jump tables 910 and 912 in Fig. 9b). For example, in some embodiments, a small jump table may require less space because it is able to provide an address corresponding to a symbol's location and a jump instruction in a single instruction. In contrast, a large jump table may require separate load address and jump instructions. If smaller jump tables are used, it is understood that the symbols contained in each table may be divided so that a particular component need only utilize one or two jump tables. However, any combination of symbols and jump tables may be used.

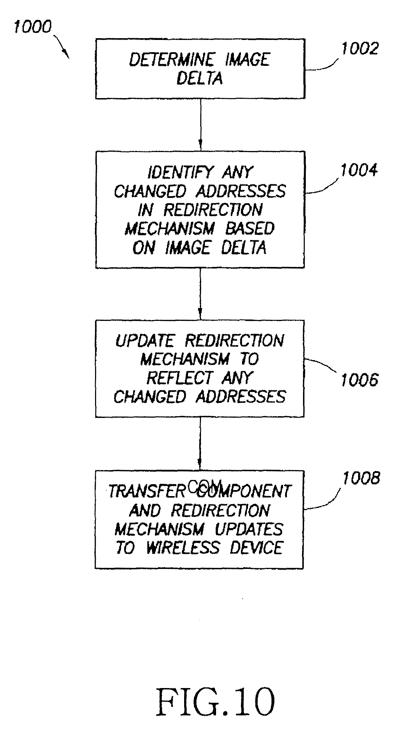

Referring to Fig. 10, in another embodiment, a method 1000 may be used to patch (i.e., update) an existing image previously created with a redirection mechanism and stored on a wireless device. The method 1000 may be executed, for example, on the image creation system 102 of Fig. 1. Firstly, in step 1002, the method 1000 determines an image delta between the existing image and a new image to identify the differences between the two images. In step 1004, any change to the address of any symbol contained in the image's redirection mechanism is identified based on the image delta. In step 1006, the addresses in the redirection mechanism are updated to reflect the identified changes. Finally, in step 1008, any component and redirection mechanism updates are transferred to the wireless device.

The present invention is advantageous in that, when an image for use in a mobile device is updated, a patch minimization module minimizes the patch size so that the influence of updates is minimized. Furthermore, when an image for use in a mobile device is provided, a redirection mechanism based on an image delta between an original image and an updated image is used so that the image update of the mobile device can be minimized.

Although only a few exemplary embodiments of this disclosure have been described in details above, those skilled in the art will readily appreciate that many modifications are possible in the exemplary embodiments without materially departing from the novel teachings and advantages of this disclosure. For example, while the present disclosure frequently uses a mobile device for purposes of example, it is understood that embodiments of the present disclosure can be used with non-mobile devices, such as those with which the size of an update is important. Also, features illustrated and discussed above with respect to some embodiments can be combined with features illustrated and discussed above with respect to other embodiments. Accordingly, all such modifications are intended to be included within the scope of this disclosure.

## Claims

1. A method for providing an image for use in a mobile device, the method comprising:
receiving at least one of a plurality of object files required for forming the image from an assembler in machine language and identifying the plurality of received object files;
forming a plurality of components from the object files;
determining a base address for each component;
generating a memory layout to define a location of each of the identified components at the corresponding base address; and
calling a linker to link the components as defined by the memory layout to create the image.

2. The method of claim 1 further comprising generating a dummy object that stores information representing each identified component and the base address corresponding to each component.

3. The method of claim 2, wherein the information is stored in an unallocated section of the dummy object.

4. The method of claim 3 further comprising updating the image using the information stored in the dummy object.

5. The method of one of claims 1 to 4, wherein forming the plurality of components includes:
determining that an operating system with which the image is compatible does not support dynamic linking; and
calling a program to partition the object files into components and create a jump table for references between the components.

6. The method of one of claims 1 to 5, wherein determining the base address for each component includes taking into account a flash memory boundary of a memory within which the image will be stored.

7. The method of one of claims 1 to 6, wherein determining the base address for each component includes parsing at least one scatter descriptor file to identify a predefined address constraint.

8. The method of one of claims 1 to 7 further comprising transferring the created image to the mobile device via a wireless interface.

9. A method for updating a mobile device, the method comprising:
determining an image delta between an original image stored on the mobile device and an updated image;
identifying any changed addresses in a redirection mechanism based on the image delta, the redirection mechanism identifying locations within the original image;
updating the redirection mechanism to reflect any changed locations; and
transferring changes identified by the image delta and the updated redirection mechanism to the mobile device.

10. The method of claim 9, wherein the image delta is determined by analyzing machine language code.

11. The method of claim 10 further comprising calling a linker to create an executable image after updating the redirection mechanism to reflect any changed locations.

12. The method of one of claims 9 to 11 further comprising identifying which of a plurality of components forming the original image have been changed in the updated image based on the image delta, wherein transferring changes identified by the image delta includes transferring only the components that have been changed.

13. The method of claim 12, wherein each component is associated with a unique location in the redirection mechanism.

14. The method of claim 13 further comprising generating a dummy object that stores information representing each identified component and its associated location.

15. A method for minimizing a patch size when creating a patch for use in a digital system, the method comprising:
receiving at least one of a plurality of files required for creating the patch in machine language code and forming components from the plurality of received files;
determining a base address for each component;
generating a memory layout to define a location of each component at the corresponding base address; and
calling a linker to link the components as defined by the memory layout to create the patch.

16. The method of claim 15, wherein forming the components includes:
determining that an operating system with which the patch is compatible does not support dynamic linking; and
calling a program to partition the files into components and create a redirection mechanism for references between the components.

17. The method of claim 15 or 16, wherein forming the components includes modifying at least one of the files received in machine language code.

18. A system for minimizing a patch size when creating a patch for use in a digital system, the system comprising:
an assembler;
a linker; and
a patch minimization module configured to:
receive a plurality of files in machine language code after at least one of the files is processed by the assembler;
form components from the plurality of files;
determine a base address for each component;
generate a memory layout to define a location of each component at the corresponding base address; and
call the linker to generate the patch as defined by the memory layout.

19. The system of claim 18, wherein the patch minimization module is further configured to:
determine that an operating system with which the patch is compatible does not support dynamic linking; and
form the components by calling a program to partition the files into the components and create a redirection mechanism for references between the formed components.

20. The system of claim 18 or 19, wherein the patch minimization module is configured to intercept calls from the assembler to the linker.

21. A mobile device comprising means for carrying out the method of one of claims 1 to 14.
